# EUROPEAN PATENT SPECIFICATION

(11) **EP 2 245 570 B1**
(45) Date of publication and mention of the grant of the patent: **16.10.2019**
(21) Application number: 08869385.8
(22) Date of filing: 17.12.2008
(51) Int. Cl.: F02D 41/00, F02D 41/24, F02D 41/02, G08G 1/0967

(54) **SYSTEM AND METHOD FOR REMOTELY MODIFYING VEHICLE OPERATIONS**
SYSTEM UND VERFAHREN ZUR FERNMODIFIKATION VON FAHRZEUGOPERATIONEN
SYSTÈME ET PROCÉDÉ POUR MODIFIER À DISTANCE DES OPÉRATIONS DE VÉHICULE

(30) Priority: 31.12.2007 US 6268; 31.12.2007 US 6262; 31.12.2007 US 6274; 31.12.2007 US 6237
(43) Date of publication of application: 03.11.2010
(73) Proprietor: Deep Science, LLC, Bellevue, WA 98005-4046 (US)
(72) Inventor: HYDE, Roderick A., Redmond, WA 98052 (US); ISHIKAWA, Muriel Y., Livermore, CA 94550-4921 (US); KARE, Jordin T., Seattle, WA 98112 (US); NUGENT, Thomas J. Jr., Bellevue, WA 98007 (US); WOOD, Lowell L. Jr., Bellevue, WA 98004 (US); WOOD, Victoria Y. H., Livermore, CA 94550-4921 (US)
(74) Representative: Fleuchaus, Michael A.
(86) International application number: PCT/US2008/013939
(87) International publication number: WO 2009/088437

(56) References cited:
- EP-A1- 0 919 419
- EP-A2- 0 383 593
- WO-A2-2006/060633
- US-A- 6 112 151
- US-A- 6 151 549
- US-A1- 2001 021 893
- US-A1- 2002 063 472
- US-A1- 2002 116 117
- US-A1- 2006 041 370
- US-A1- 2007 233 349
- B. Tatomir ET AL: "Hierarchical Routing in Traffic Using Swarm-Intelligence", 2006 IEEE Intelligent Transportation Systems Conference : Toronto, Ontario, Canada, 17 - 20 September 2006, 1 January 2006 (2006-01-01), pages 230-235, XP055322986, USA DOI: 10.1109/ITSC.2006.1706747 ISBN: 978-1-4244-0093-5

## Description

### BACKGROUND

WO2006/060633 discloses a system and method for remotely monitoring the status of a hydrogen vehicle that includes a data acquisition/communication module configured to receive a plurality of signals representing one or more status conditions associated with the vehicle. The data acquisition/ communication module is further configured to report one or more of the status conditions to a computer remote from the vehicle. The system is further configured to receive one or more signals from the remote computer in response to the reported status condition wherein the received signal represents an action to be taken in response to the one or more status conditions. The data acquisition/communication module is also configured to initiate the action to be taken. A computer remote from the vehicle is configured to monitor the one or more status conditions reported by the data acquisition/communication module and determine if an action must be taken.

### SUMMARY

Aspects of the invention are as defined in the claims. Examples not falling within the scope of the claims are not part of the invention,

In one example, a method of controlling an engine in a vehicle includes broadcasting a control signal to the vehicle during operation of the engine, the signal including instructions for modification of a vehicle operating parameter (*e.g*., compression ratio, timing of commencement of fuel combustion, timing of fuel injection, timing of fuel introduction into an air-inlet stream, valve timing, fuel composition, fuel-oxidizer ratio, air inlet temperature, air inlet pressure, number of operating cylinders, battery usage, battery charge, engine or drive-train usage of electrical energy, engine operating rate, output torque, exhaust gas temperature, exhaust gas temperature profile, exhaust gas composition, exhaust gas back pressure, catalytic converter reactive area, exhaust gas flow path, catalyst selection, sequestration of at least one exhaust gas component, exhaust gas flow rate, exhaust particulates density, exhaust particulate composition, exhaust particulate size, concentration of exhaust components at a selected location in an exhaust flow path, coolant temperature, or inlet-exhaust thermal coupling). Broadcasting a control signal may include sending an electromagnetic control signal *(e.g.,* a wireless signal), an optical control signal, or an acoustic control signal. The control signal may be broadcast to a plurality of vehicles, or a second control signal may be broadcast to a second vehicle. The method may further include receiving an acknowledgement signal from the vehicle (*e.g.,* a signal including identifying information, location, information about the vehicle operating parameter such as changes made in response to the control signal, or information about other vehicle operating parameter(s)). A control signal may be selected for broadcast responsive to one or more acknowledgement signals. The method may further include transmitting information about the acknowledgement signal or the control signal to a remote compliance system. Broadcasting may include broadcasting verifying information selected to allow the vehicle to determine authenticity of the control signal. The method may include determining an identifying property of the vehicle, for example by receiving an identifying signal from the vehicle, where selecting the control signal is in response to the identifying property (*e.g.,* car make, car model, engine type, exhaust type, vehicle identification number, license number, location, settings of the engine control unit, or fuel type). The control signal may include a first set of instructions for a vehicle having a first characteristic (*e.g.,* vehicle type or vehicle operating parameter), and a second set of instructions for a vehicle having a second characteristic. The control signal may include instructions to select one member of a group of preprogrammed instruction sets. The control signal may be selected probabilistically, or may include a condition for performing the instructions such as a probabilistic condition. Instructions for modification of the vehicle operating parameter may include a designated value, designated range, designated average value within a time interval, or designated time profile for the vehicle operating parameter, or may include instructions for modification of a plurality of vehicle operating parameters. Instructions are at least partially based on previous compliance history for the vehicle. The control signal may be selected responsive to an environmental parameter (*e.g.,* temperature, pressure, partial pressure of an atmospheric component, local level of a selected pollutant, local insolation values, humidity, precipitation, wind conditions, road cover conditions, time, traffic conditions, local rules, altitude, or local level of CO, CO₂, NOₓ, O₃, or airborne particulates), including a predicted environmental parameter.

In another example, a control system for controlling an operating parameter of vehicles in a target area includes a control signal broadcast unit configured to broadcast a control signal (*e.g.,* an electromagnetic control signal such as a wireless signal, an optical control signal, or an acoustic control signal) including instructions for modification of a vehicle operating parameter (*e.g*., compression ratio, timing of commencement of fuel combustion, timing of fuel injection, timing of fuel introduction into an air-inlet stream, valve timing, fuel composition, fuel-oxidizer ratio, air inlet temperature, air inlet pressure, number of operating cylinders, battery usage, battery charge, engine or drive-train usage of electrical energy, engine operating rate, output torque, exhaust gas temperature, exhaust gas temperature profile, exhaust gas composition, exhaust gas back pressure, catalytic converter reactive area, exhaust gas flow path, catalyst selection, sequestration of at least one exhaust gas component, exhaust gas flow rate, exhaust particulates density, exhaust particulate composition, exhaust particulate size, concentration of exhaust components at a selected location in an exhaust flow path, coolant temperature, or inlet-exhaust thermal coupling) to at least one vehicle in the target area. The control system may further include a signal determination unit configured to select instructions for modification of the vehicle operating parameter for incorporation into the control signal. The signal determination unit may be, for example, configured to allow an operator to select the vehicle operating parameter, to use a lookup table to determine a permitted value or range of values for the vehicle operating parameter, or to select a permitted value or range of values for the vehicle operating parameter in response to an environmental condition (*e.g.,* temperature, pressure, partial pressure of an atmospheric component, local level of a selected pollutant, local insolation values, humidity, precipitation, wind conditions, road cover conditions, time, traffic conditions, local rules, altitude, or local level of CO, CO₂, NOₓ, O₃, or airborne particulates), including a predicted environmental condition. The control signal broadcast unit may be configured to broadcast a control signal including instructions conditional on a vehicle characteristic (*e.g.*, vehicle type or one or more vehicle operating parameters. It may be configured to broadcast a control signal including instructions to select one member of a group of preprogrammed instruction sets. The control signal may be selected probabilistically, or may include a condition for performing the instructions such as a probabilistic condition. Instructions for modification of the vehicle operating parameter may include a designated value, designated range, designated average value within a time interval, or designated time profile for the vehicle operating parameter, or may include instructions for modification of a plurality of vehicle operating parameters. Instructions are at least partially based on previous compliance history for the vehicle. The control system may further include an acknowledgement signal receiving unit configured to receive an acknowledgement signal from the vehicle (*e.g.,* a signal including identifying information, location, information about the vehicle operating parameter such as compliance actions taken, or information about other vehicle operating parameter(s)). The control system may further include a compliance transmitter configured to transmit information about the control signal or the acknowledgement signal to a remote compliance system. A control signal may be selected for broadcast responsive to one or more acknowledgement signals. The control system may include a vehicle identification units configured to determine a property of the vehicle, for example by receiving an identification signal, the control signal broadcast unit being configured to broadcast the control signal responsive to the determined vehicle property (*e.g.,* car make, car model, engine type, exhaust type, vehicle identification number, license number, location, settings of the engine control unit, or fuel type). The control signal may include verifying information selected to allow the vehicle to determine authenticity of the control signal.

In yet another example, a method of operating a vehicle having an engine includes, during operation of the engine, receiving a control signal (*e.g.,* an electromagnetic control signal such as a wireless signal, an optical control signal, or an acoustic control signal) broadcast from outside the vehicle, the control signal including instructions for modification of a vehicle operating parameter (*e.g*., compression ratio, timing of commencement of fuel combustion, timing of fuel injection, timing of fuel introduction into an air-inlet stream, valve timing, fuel composition, fuel-oxidizer ratio, air inlet temperature, air inlet pressure, number of operating cylinders, battery usage, battery charge, engine or drive-train usage of electrical energy, engine operating rate, output torque, exhaust gas temperature, exhaust gas temperature profile, exhaust gas composition, exhaust gas back pressure, catalytic converter reactive area, exhaust gas flow path, catalyst selection, sequestration of at least one exhaust gas component, exhaust gas flow rate, exhaust particulates density, exhaust particulate composition, exhaust particulate size, concentration of exhaust components at a selected location in an exhaust flow path, coolant temperature, or inlet-exhaust thermal coupling), and modifying the vehicle operating parameter in accordance with the instructions. The method may further including sending an acknowledgement signal in response to receiving a control signal, which may include, for example, information about the vehicle operating parameter, information about the modification of the vehicle operating parameter, information about identity of the vehicle, or information about one or more vehicle operating parameters. The method may further include sending an identifying signal characterizing a property of the vehicle (*e.g.,* car make, car model, engine type, exhaust type, vehicle identification number, license number, location, settings of the engine control unit, or fuel type). Modifying the vehicle operating parameter in accordance with the instructions may include determining applicable portions of a signal conditional on a vehicle characteristic (e.g., vehicle type or one or more vehicle operating parameters) and modifying the vehicle operating parameter in accordance only with the applicable portions of the signal. Modifying the vehicle operating parameter may include selecting one of a plurality of preprogrammed instruction sets, or may include determining whether a condition included in the instructions obtains (*e.g.,* a probabilistic condition) and modifying the vehicle operating parameter only if the condition obtains. Modifying the vehicle operating parameter may include maintaining a designated value, designated range, designated average value within a time interval, or designated time profile for the vehicle operating parameter, or may include modifying a plurality of vehicle operating parameters. The method may further include verifying authenticity of the control signal, for example before modifying the vehicle operating parameter.

In still another example, an engine control system for a vehicle having an engine includes a control signal receiving unit configured to receive a control signal (*e.g.,* an electromagnetic control signal such as a wireless signal, an optical control signal, or an acoustic control signal) broadcast from outside the vehicle during engine operation, the control signal including instructions for modification of a vehicle operating parameter (*e.g*., compression ratio, timing of commencement of fuel combustion, timing of fuel injection, timing of fuel introduction into an air-inlet stream, valve timing, fuel composition, fuel-oxidizer ratio, air inlet temperature, air inlet pressure, number of operating cylinders, battery usage, battery charge, engine or drive-train usage of electrical energy, engine operating rate, output torque, exhaust gas temperature, exhaust gas temperature profile, exhaust gas composition, exhaust gas back pressure, catalytic converter reactive area, exhaust gas flow path, catalyst selection, sequestration of at least one exhaust gas component, exhaust gas flow rate, exhaust particulates density, exhaust particulate composition, exhaust particulate size, concentration of exhaust components at a selected location in an exhaust flow path, coolant temperature, or inlet-exhaust thermal coupling), and an engine controller configured to modify the vehicle operating parameter in accordance with the instructions. The engine control system may further include an acknowledgement signal sending unit configured to send an acknowledgement signal, for example indicating any modification of the vehicle operating parameter responsive to the control signal, indicating identity of the vehicle, indicating location of the vehicle, or indicating state or history of one or more vehicle operating parameters. The control signal receiving unit may be configured to determine authenticity of the control signal. It may be configured to receive a plurality of instruction sets, and to select at least one of the plurality corresponding to a characteristic of the vehicle (*e.g.,* vehicle type or a vehicle operating parameter). It may be configured to receive an instruction to select one of a group of preprogrammed instruction sets, or to receive a conditional signal and to determine if the condition (*e.g.,* a probabilistic condition) obtains, and to direct the engine controller to comply with the signal instructions only if the condition obtains. The engine controller may be configured to maintain a designated value, designated range, designated average value within a time interval, or designated time profile for the vehicle operating parameter, or to modify a plurality of vehicle operating parameters.

In yet still another example, an exhaust control system for a vehicle having an engine and an exhaust system includes an exhaust controller configured to determine an acceptable range for an exhaust parameter responsive to an ambient condition (*e.g.,* temperature, pressure, partial pressure of an atmospheric component, local level of a selected pollutant, local insolation values, humidity, precipitation, wind conditions, road cover conditions, traffic conditions, local rules, altitude, or location, any of which may be a predicted value), and to direct the exhaust system to maintain the exhaust parameter within the acceptable range, the exhaust parameter being selected from the group consisting of exhaust gas temperature, exhaust gas temperature profile, exhaust gas composition, exhaust gas back pressure, catalytic converter reactive area, exhaust gas flow path, catalyst selection, sequestration of at least one exhaust gas component, exhaust gas flow rate, exhaust particulates density, exhaust particulate composition, exhaust particulate size, concentration of exhaust components at a selected location in an exhaust flow path, coolant temperature, and inlet-exhaust thermal coupling. The system may further include a compliance reporting unit configured to transmit a record of exhaust parameter adjustments (*e.g.,* by wireless transmission). The system may further include an exhaust parameter sensor, the exhaust controller being configured to accept a sensor signal from the exhaust parameter sensor indicative of the state of the exhaust parameter and to use the sensor signal to direct the exhaust system to maintain the exhaust parameter within the acceptable range. Sensors may be, for example, electromagnetic sensors, spectroscopic sensors, thermal sensors, chemical sensors, pressure sensors, acoustic sensors, vibration sensors, mass sensors, electromechanical sensors, electrochemical sensors, microelectromechanical devices, or optical sensors, and may be configured to measure temperature, pressure, gas composition, vapor composition, particulate content, particulate composition, particulate size distribution, flow rate, density, force, strain, or displacement. The sensor may be internal or external to the vehicle. The exhaust controller may be configured to determine an acceptable range for an exhaust parameter responsive to an ambient condition by selecting from a set of exhaust profiles. The acceptable range for the exhaust parameter may include an acceptable range for a time-averaged value of the exhaust parameter during a time interval, an acceptable range for a designated function of the exhaust parameter, an acceptable range for a second exhaust parameter, or an acceptable range for a designated function of a plurality of exhaust parameters, an acceptable range for the value of the exhaust parameter during a probability weighted time interval, or a time profile for the acceptable range for the exhaust parameter.

In a further example, a vehicle control system for a vehicle having an engine and an exhaust system includes an exhaust controller configured to determine an acceptable range for a vehicle parameter for a selected local time period and to direct the vehicle to maintain the vehicle parameter within the acceptable range during the selected local time period, the vehicle parameter being selected from the group consisting of compression ratio, timing of commencement of fuel combustion, timing of fuel injection, timing of fuel introduction into an air-inlet stream, valve timing, fuel composition, fuel-oxidizer ratio, air inlet temperature, air inlet pressure, number of operating cylinders, battery usage, battery charge, engine or drive-train usage of electrical energy, engine operating rate, output torque, exhaust gas temperature, exhaust gas temperature profile, exhaust gas composition, exhaust gas back pressure, catalytic converter reactive area, exhaust gas flow path, catalyst selection, sequestration of at least one exhaust gas component, exhaust gas flow rate, exhaust particulates density, exhaust particulate composition, exhaust particulate size, concentration of exhaust components at a selected location in an exhaust flow path, coolant temperature, and inlet-exhaust thermal coupling. The vehicle may be configured to determine the acceptable range for the vehicle parameter for the selected local time period based at least in part on vehicle location. The vehicle control system may further include a compliance reporting unit configured to transmit a record of vehicle parameter adjustments (*e.g.,* by a wireless transmission). The vehicle controller may include an internal clock, or may be configured to determine time from an external signal.

In yet a further example, a method of controlling an exhaust system in a vehicle includes determining an ambient condition (*e.g.,* temperature, pressure, partial pressure of an atmospheric component, local level of a selected pollutant, local insolation values, humidity, precipitation, wind conditions, road cover conditions, traffic conditions, local rules, altitude, or location) and, responsive to the ambient condition, adjusting an exhaust parameter of the exhaust system selected from the group consisting of exhaust gas temperature, exhaust gas temperature profile, exhaust gas composition, exhaust gas back pressure, catalytic converter reactive area, exhaust gas flow path, catalyst selection, sequestration of at least one exhaust gas component, exhaust gas flow rate, exhaust particulates density, exhaust particulate composition, exhaust particulate size, concentration of exhaust components at a selected location in an exhaust flow path, coolant temperature, and inlet-exhaust thermal coupling. The method may further include transmitting a record of the adjusting of the exhaust parameter (*e.g.,* by wireless transmission).

In still a further example, a method of controlling a vehicle includes, responsive to local time, adjusting a vehicle parameter of the vehicle selected from the group consisting of compression ratio, timing of commencement of fuel combustion, timing of fuel injection, timing of fuel introduction into an air-inlet stream, valve timing, fuel composition, fuel-oxidizer ratio, air inlet temperature, air inlet pressure, number of operating cylinders, battery usage, battery charge, engine or drive-train usage of electrical energy, engine operating rate, output torque, exhaust gas temperature, exhaust gas temperature profile, exhaust gas composition, exhaust gas back pressure, catalytic converter reactive area, exhaust gas flow path, catalyst selection, sequestration of at least one exhaust gas component, exhaust gas flow rate, exhaust particulates density, exhaust particulate composition, exhaust particulate size, concentration of exhaust components at a selected location in an exhaust flow path, coolant temperature, and inlet-exhaust thermal coupling. The method may further include transmitting a record of the adjusting of the vehicle parameter (*e.g.,* by wireless transmission).

In yet still a further example, an engine control system for a vehicle having an engine includes an engine controller configured to determine an acceptable range for an engine operating parameter responsive to traffic conditions and to direct the engine to maintain the engine operating parameter within the acceptable range, the engine operating parameter being selected from the group consisting of compression ratio, timing of commencement of fuel combustion, timing of fuel injection, timing of fuel introduction into an air-inlet stream, valve timing, fuel composition, air inlet temperature, air inlet pressure, number of operating cylinders, battery usage, battery charge, engine or drive-train usage of electrical energy, engine operating rate, and output torque. The engine control system may further include a compliance reporting unit configured to transmit a record of engine operating parameter adjustments. The engine controller may be configured to receive a traffic condition signal from an external source (*e.g.,* a central repository of traffic information or another vehicle), or may be configured to monitor vehicle operation in order to determine traffic conditions.

In an additional example, a method of controlling a vehicle having an engine includes, responsive to traffic conditions, determining an acceptable range for an engine operating parameter and directing the engine to maintain the engine operating parameter within the acceptable range, the engine operating parameter selected from the group consisting of compression ratio, timing of commencement of fuel combustion, timing of fuel injection, timing of fuel introduction into an air-inlet stream, valve timing, fuel composition, air inlet temperature, air inlet pressure, number of operating cylinders, battery usage, battery charge, engine or drive-train usage of electrical energy, engine operating rate, and output torque. The method may further include transmitting a record of engine operating parameter adjustments (*e.g.,* wirelessly). The method may include receiving a traffic condition signal from an external source (*e.g.*, a central repository of traffic information or another vehicle), monitoring vehicle operation in order to determine traffic conditions.

### BRIEF DESCRIPTION OF THE FIGURES

**FIG. 1** is a schematic showing a control system for controlling vehicle emissions in a geographic area.
**FIG. 2** is a schematic of a vehicle control system.
**FIG. 3** is a schematic of an exhaust controller for a vehicle.
**FIG. 4** is a schematic of a time-sensitive exhaust controller for a vehicle.
**FIG. 5** is a schematic of a traffic-condition-responsive engine controller for a vehicle.

### DETAILED DESCRIPTION

In the following detailed description, reference is made to the accompanying drawings, which form a part hereof. In the drawings, similar symbols typically identify similar components, unless context dictates otherwise.

As used herein, the term "vehicle" encompasses devices for conveying persons or objects, including without limitation automobiles, trucks, trains, and other land conveyances, boats, ships, and other watergoing vessels, and aircraft. In some embodiments, vehicles may possess internal combustion engines, but conveyances using other sources of locomotive power are also encompassed in the term "vehicle".

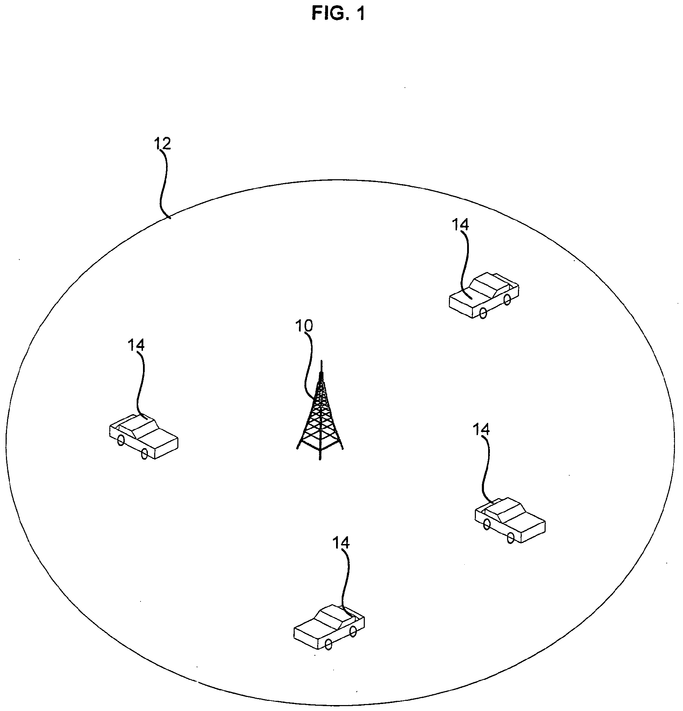

**FIG. 1** is a schematic showing a control system for controlling vehicle emissions in a geographic area. Control tower **10** broadcasts a control signal including instructions for modifying a vehicle operating parameter (*e.g*., compression ratio, timing of commencement of fuel combustion, timing of fuel injection, timing of fuel introduction into an air-inlet stream, valve timing, fuel composition, fuel-oxidizer ratio, air inlet temperature, air inlet pressure, number of operating cylinders, battery usage, battery charge, engine or drive-train usage of electrical energy, engine operating rate, output torque, exhaust gas temperature, exhaust gas temperature profile, exhaust gas composition, exhaust gas back pressure, catalytic converter reactive area, exhaust gas flow path, catalyst selection, sequestration of at least one exhaust gas component, exhaust gas flow rate, exhaust particulates density, exhaust particulate composition, exhaust particulate size, concentration of exhaust components at a selected location in an exhaust flow path, coolant temperature, or inlet-exhaust thermal couplingg) to vehicles **14** in a defined area **12** around the tower **10.** (In other embodiments, control tower **10** may be replaced by other systems that broadcast to vehicles in a selected area, such as a satellite communications system, a peer-to-peer network, a bucket-brigade network, or other means of communication between at least one central point and a vehicle.) Vehicles **14** receive the broadcast signal from control tower **10** and adjust their operating parameters to comply with the instructions. For example, a municipality may specify that within its boundaries, fuel-oxidizer ratios must be lean, and may erect one or more control towers **10** that broadcast signals instructing vehicles **14** to adjust their fuel injection systems to comply.

The instructions for the operating parameter may be adjusted according to ambient conditions (*e.g.,* temperature, pressure, partial pressure of an atmospheric component, local level of a selected pollutant, local insolation values such as local UV fraction, humidity, precipitation, wind conditions such as magnitude or direction, road cover conditions, time, traffic conditions, local rules, altitude, or local level of CO, CO₂, NOₓ, O₃, or airborne particulates), including predicted ambient conditions. For example, richer fuel mixtures may be allowed when colder weather is predicted, or when local air pollution levels are found to be relatively low. Vehicles configured to run on more than one possible fuel composition may be directed which fuel to use, for example in response to ambient weather conditions or to traffic patterns.

The control signal broadcast by control tower **10** may be an electromagnetic signal (*e.g.,* a digital signal), an optical signal, or an acoustic signal. In some embodiments, the control tower **10** may broadcast a plurality of different signals, for example at the same time or in succession. For example, different signals may be intended for different vehicles or classes of vehicles, or for vehicles in different areas. The control tower **10** may also broadcast a conditional signal. For example, the signal may direct that if a vehicle has a certain property (*e.g*., make, model, number of cylinders, fuel type, or other operating parameter), then it should operate with an operating parameter in a particular range. The range may also be conditional on other vehicle properties or operating parameters. Vehicles **14** may transmit information about their properties or operating parameters to the control tower **10.** For example, a control tower may note that there are cars of three makes in its vicinity by reading their transmissions, and may then broadcast a signal tailored to those three makes, such as a conditional signal that specifies an operating parameter for each of those three makes. Rather than explicitly setting a value or range for an operating parameter, the control tower **10** may broadcast a signal directing the vehicle **14** to select from one or more preprogrammed instruction sets (*e.g*., instructing the vehicle to switch to a carbon monoxide emission minimizing mode).

The control tower **10** may also select a control signal for broadcast probabilistically. For example, the control tower **10** may select every fourth vehicle (or a randomly selected 25%, or any other percentage) of vehicles to shift to a lower-emissions mode. The control signal may also include a condition for performing the functions. This condition may be deterministic (*e.g.,* if exhaust back pressure exceeds a threshold value, adjust compression ratios) or probabilistic (*e.g.,* generate a random or pseudorandom number between 0 and 1, and shift to a low-emissions mode if it exceeds 0.75).

In some embodiments, the control signal may include a designated value for the vehicle operating parameter. In other embodiments, the control signal may include a designated range, a designated average value, or a designated time profile for the vehicle operating parameter (*e.g.,* an instruction to run in a lower-emissions mode during a particular time interval). The control signal may include instructions for modifying a plurality of vehicle operating parameters. In some embodiments, the instructions are at least partially based on previous compliance history for the vehicle by sending more stringent instructions to vehicles that have not previously complied. The control tower **10** may also notify enforcement agents (*e.g.,* the local police) of noncompliance of specific vehicles or of the existence of a noncompliant vehicle in a particular area. Control signals to be sent may be generated by a signal determination unit (not shown), and may be determined automatically or by an operator (onsite or remote).

The control tower **10** may also receive an acknowledgement signal from one or more vehicles. The acknowledgement signal may include identifying information for the vehicle (e.g., make or model of car, engine type, exhaust type, VIN, license number, or settings of the engine control unit), location information for the vehicle, information about one or more vehicle operating parameters (*e.g*., values of one or more operating parameters, or information about changes made in a vehicle operating parameter in response to the control signal), or information about the received signal (*e.g*., confirming that the signal was received correctly or identifying which signal was received). The control tower **10** may transmit information about the acknowledgement signal (*e.g.,* confirmation that the vehicle has complied with the control signal) or the control signal to a remote compliance system (not shown). The control tower **10** may select a control signal responsive to one or more acknowledgement signals (*e.g*., the tower may adjust the control signals that it sends depending on the number or type of acknowledgement signals received).

The control tower **10** may further include a vehicle identification unit (not shown), which may be configured to determine a property of a vehicle (*e.g*., make, model, engine type, exhaust type, VIN, license number, location, settings of the engine control unit, or fuel type). In some embodiments, the control signal may be determined at least in part based on the determined vehicle property.

In some embodiments, a vehicle **14** may verify authenticity of the control signal before modifying the vehicle operating parameter in accordance with its instructions. For example, the vehicle **14** may decrypt the signal, or may transmit a signal requesting that the control tower **10** broadcast an authentication sequence, or may recognize that the signal includes self-authenticating elements.

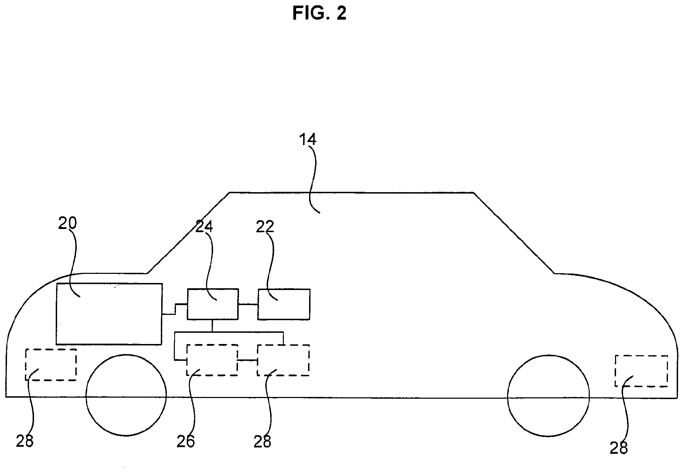

**FIG. 2** is a schematic of a vehicle control system. Vehicle **14** includes an engine **20,** a control signal receiving unit **22,** and an engine controller **24.** It may also include acknowledgement signal sending unit **26** or optional sensors **28,** which may be configured to exchange information with engine controller **24** or acknowledgement signal sending unit **26.** Control signal receiving unit **22** is configured to receive a broadcast signal from outside the vehicle (*e.g.*, a control signal such as that sent by control tower **10** described herein). The broadcast signal includes instructions for modifying a vehicle operating parameter. The receiving unit **22** then communicates with the engine controller **24,** which carries out the instructions.

In some embodiments, the receiving unit **22** may perform other functions, such as signal filtering. For example, a broadcast signal may not be applicable to all vehicles, and the receiving unit **22** may determine whether the signal is applicable and transmit the instructions to engine controller **24** only if they apply to vehicle **14.** The receiving unit may also include circuitry for determining whether the broadcast signal is authentic, and transmit the instructions to engine controller **24** only if they are determined to originate from a broadcaster with authority to direct the requested changes to vehicle operation. Receiving unit **22** or other components may also determine that vehicle **14** cannot safely comply with the received instructions, and may decline to transmit the instructions to engine controller **24** or may countermand previously transmitted instructions if compliance would be unsafe.

Engine controller **24** alters engine settings as necessary to comply with broadcast instructions. For example, in engines capable of running at a variable compression ratio, the broadcast signal may specify a particular compression ratio, in which case engine controller **24** directs engine **20** accordingly. Alternatively, the broadcast signal may specify that the compression ratio is to be adjusted to place some other operating parameter within a specific range, for example to specify that exhaust gas may contain no more than a selected quantity of NOₓ. (It will be understood that while compression ratio is referred to in these examples, other vehicle operating parameters may also be used, including without limitation combustion timing, fuel composition, fuel-oxidizer ratio, exhaust temperature, exhaust temperature profile, exhaust gas mixture, exhaust gas back pressure, catalytic area, exhaust flow path, catalyst selection, number of operating cylinders, battery usage, engine usage of electrical energy, exhaust gas sequestration, inlet temperature, or inlet-exhaust thermal coupling. In particular, some examples of engines which may operate with variable compression ratios or variable numbers of operating cylinders may be found in copending and commonly owned US Application Nos. 11/973,297, filed October 4, 2007 and entitled "ELECTROMAGNETIC ENGINE," 11/973,343, filed October 5, 2007 and entitled "FREE PISTON ELECTROMAGNETIC ENGINE," 11/973,640, filed October 9,2007 and entitled "OPPOSED PISTON ELECTROMAGNETIC ENGINE," and 11/974,173, filed October 10, 2007 and entitled "METHOD OF RETROFITTING AN ENGINE,".

In some embodiments, the necessary modification of the engine operating parameter may be determined *a priori* by engine controller **24.** In other embodiments, engine controller **24** may receive information from optional sensors **28.** For example, gas sensors may provide information about exhaust composition, or temperature sensors may provide temperatures in different locations in the engine (*e.g.*, combustion temperature or exhaust temperature). This sensor information may be used as a feedback control for engine controller **24** to further adjust one or more engine operating parameters. Suitable sensors for use in these embodiments include without limitation sensors for properties of gases or liquids such as temperature, pressure, density, flow rate, or composition (*e.g.*, partial pressure sensors for specific gases), acoustic or vibration sensors, and force, strain, or displacement sensors for solid components. In some embodiments, sensors may be implemented using conventional electromechanical or electrochemical means (*e.g.*, strain gages, oxygen sensors), microelectromechanical (MEMS) devices, optical sensing (*e.g.,* absorption or emission spectrometers, optical thermometers) using free-space or fiber optics, or by other means.

The vehicle may also include optional acknowledgement signal sending unit **26.** This unit may be configured to communicate with engine controller **24** or sensors **28** (if present) and to transmit information about vehicle operation. For example, acknowledgement signal sending unit **26** may inform control tower **10** that its instructions have been complied with, may report any compliance actions taken, or may report engine controller settings, sensor data, or other vehicle status information such as location or vehicle operating parameter values or history.

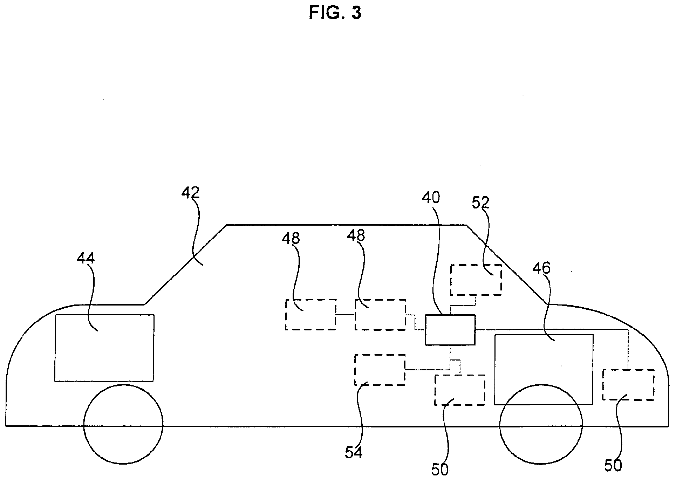

**FIG. 3** is a schematic of an exhaust controller **40** for a vehicle **42** having an engine **44** and an exhaust system **46.** The exhaust controller **40** may optionally be operatively linked to one or more ambient condition sensors **48** or exhaust parameter sensors **50,** a broadcast signal receiving unit **52,** or a compliance reporting unit **54.** The exhaust controller **40** is configured to determine an acceptable range for an exhaust parameter (exhaust gas temperature, exhaust gas temperature profile, exhaust gas composition, exhaust gas back pressure, catalytic converter reactive area, exhaust gas flow path, catalyst selection, sequestration of at least one exhaust gas component, exhaust gas flow rate, exhaust particulates density, exhaust particulate composition, exhaust particulate size, concentration of exhaust components at a selected location in an exhaust flow path, coolant temperature, or inlet-exhaust thermal coupling) responsive to an ambient condition (*e.g.*, temperature, pressure, partial pressure of an atmospheric component, local level of a selected pollutant, local insolation values such as local UV fraction, humidity, precipitation, wind conditions such as magnitude or direction, road cover conditions, time, traffic conditions, local rules, altitude, location, or local level of CO, CO₂, NOₓ, O₃, or airborne particulates), including a predicted ambient condition. Exhaust controller **40** then directs engine **44** or exhaust system **46** to maintain the exhaust parameter within the acceptable range (*e.g.*, using one or more exhaust parameter sensors **50** for feedback control of the exhaust parameter). The acceptable range may include an acceptable range for the time averaged value of the exhaust parameter during a time interval, or it may include an acceptable range for a designated function of the exhaust parameter (*e.g.*, allowing some out-of-range values as long as extreme values are not reached, or preferring lower values to higher values within the range). The acceptable range may also be established for multiple exhaust parameters, or for a function of multiple exhaust parameters. The acceptable range may also include an acceptable range for the value of the exhaust parameter during a probability weighted time interval (*e.g.*, the parameter must be within range for at least 80% of the time).

In one embodiment, exhaust controller **40** may use an ambient condition sensor **48** to determine that precipitation is falling around the vehicle, and may direct the engine **44** or the exhaust system **46** to shift to an operational mode that minimizes output of waterborne contaminants. In another embodiment, the exhaust controller **40** may recognize that the vehicle has entered an emissions-controlled zone *(e.g.,* by receiving a broadcast signal via receiving unit **52** or by determination of vehicle location via GPS or other navigational systems) and may direct the exhaust system **46** to maintain emissions below a specified level for the emissions-controlled zone, for example by shifting the exhaust flow path to change catalytic area or catalyst types. The exhaust controller **40** may further be linked to a compliance reporting unit **54,** which may be configured to transmit a record of exhaust parameter adjustments. For example, the compliance reporting unit **54** may include a transmitter that sends a compliance signal to a remote unit during vehicle operation, or it may include a memory device that stores a record of exhaust parameter values for later transmission (*e.g.*, for transmission via a direct or wireless connection during vehicle fueling).

Optional exhaust parameter sensors **50** may be internal or external to the vehicle, and may include without limitation sensors for exhaust temperature, pressure, gas composition, water vapor content or content of other specific gases or vapors, or particulate content, size distribution, and composition. Exhaust parameters may be sensed as a function of time, position, or other parameter (*e.g*., engine load). Sensors may include electromechanical sensors (*e.g.,* for pressure or temperature), electrochemical sensors, MEMS sensors, active or passive optical sensors employing free-space or fiber optics (*e.g.*, laser absorption spectrometer or laser particulate sensor), electromagnetic sensors including RF, microwave, and millimeter-wave sensors, or acoustic sensors. In some cases, a plurality of sensors **50** may be used to measure an exhaust parameter (*e.g.*, an array of temperature sensors may produce a temperature profile along the exhaust path, or a plurality of gas sensors may be used to analyze exhaust composition).

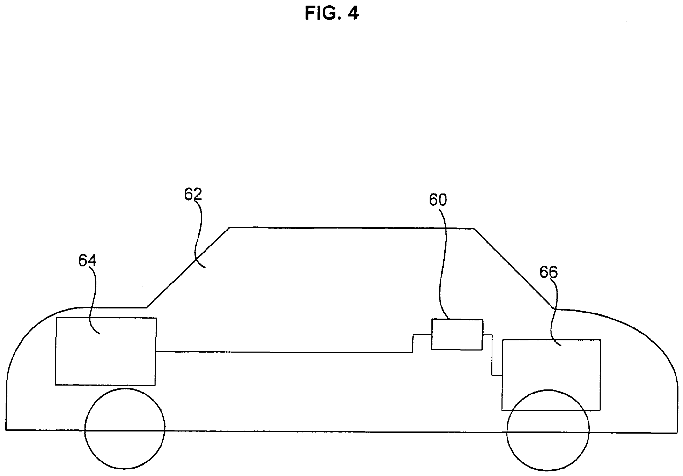

**FIG. 4** is a schematic of a local-time-sensitive vehicle controller **60** for a vehicle **62** having an engine **64** and an exhaust system **66.** The vehicle controller **60** is configured to determine an acceptable range for a vehicle parameter during a selected time period and to direct engine **64** or exhaust system **66** to maintain the vehicle parameter in the acceptable range during the selected time period. For example, vehicle controller **60** may determine that more CO₂ may be emitted during nighttime hours, and direct the exhaust system to relax limits on CO₂ production between sunset and sunrise. In some embodiments, the selection of a time period and a corresponding acceptable range for the exhaust parameter may be based upon local statutes (which may be preloaded into the logic of vehicle controller **60,** determined by downloading or otherwise receiving information from a central source such as a municipal control tower, or determined by other means).

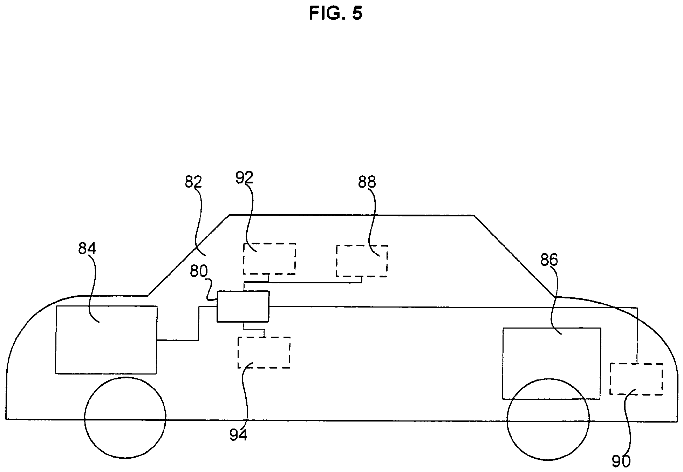

**FIG. 5** is a schematic of an engine controller **80** for a vehicle **82** having an engine **84** and an exhaust system **86.** The engine controller **80** may be operatively linked to one or more ambient condition sensors **88** or vehicle parameter sensors **90,** a signal receiving unit **92,** or a compliance reporting unit **94.** The engine controller is configured to determine an acceptable range for an engine operating parameter (compression ratio, combustion timing, fuel composition, number of operating cylinders, battery usage, engine usage of electrical energy, inlet temperature, or inlet-exhaust thermal coupling) responsive to traffic conditions. It then directs the engine **84** to maintain the engine operating parameter within the determined acceptable range. For example, a vehicle may shift to a smaller number of operating cylinders when traffic is determined to be flowing at a relatively constant speed and high power is not expected to be needed.

In some embodiments, traffic conditions may be sensed by ambient condition sensors **88** (*e.g*., optical sensing of positions of nearby vehicles), by vehicle parameter sensors **90** (*e.g.*, accelerometers, GPS, or other vehicle location sensors), or by monitoring vehicle operation (*e.g.*, throttle and gear settings or brake usage). In other embodiments, traffic data may be received from an external source (*e.g*., via optional signal receiving unit **92**), such as a central repository of traffic information, or another vehicle or vehicles.

In some embodiments, optional compliance reporting unit **94** may be configured to transmit a record of engine operating parameter adjustments. For example, the compliance reporting unit **94** may include a transmitter that sends a compliance signal to a remote unit during vehicle operation, or it may include a memory device that stores a record of engine parameter values for later transmission (*e.g.*, for transmission via a direct or wireless connection during vehicle fueling).

Various embodiments of vehicle controllers and signaling units have been described herein. In general, features that have been described in connection with one particular embodiment may be used in other embodiments, unless context dictates otherwise. For example, the acknowledgement signal sending units described in connection with **FIG. 1** and **FIG. 2** may be employed in any of the embodiments described herein. For the sake of clarity, descriptions of such features have not been repeated, but will be understood to be included in the different examples and embodiments described herein.

In a general sense, those skilled in the art will recognize that the various examples described herein which can be implemented, individually or collectively, by a wide range of hardware, software, firmware, or any combination thereof can be viewed as being composed of various types of "electrical circuitry." Consequently, as used herein, "electrical circuitry" includes, but is not limited to, electrical circuitry having at least one discrete electrical circuit, electrical circuitry having at least one integrated circuit, electrical circuitry having at least one application specific integrated circuit, electrical circuitry forming a general purpose computing device configured by a computer program *(e.g.,* a general purpose computer configured by a computer program which at least partially carries out processes or devices described herein, or a microprocessor configured by a computer program which at least partially carries out processes or devices described herein), electrical circuitry forming a memory device (*e.g*., forms of random access memory), or electrical circuitry forming a communications device (*e.g.*, a modem, communications switch, or optical-electrical equipment). Those having skill in the art will recognize that the subject matter described herein may be implemented in an analog or digital fashion or some combination thereof.

It will be understood by those within the art that, in general, terms used herein, and especially in the appended claims are generally intended as "open" terms (*e.g*., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of introductory phrases such as "at least one" or "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (*e.g.,* "a cylinder" should typically be interpreted to mean "at least one cylinder"); the same holds true for the use of definite articles used to introduce claim recitations. In addition, even if a specific number of an introduced claim recitation *is* explicitly recited, those skilled in the art will recognize that such recitation should typically be interpreted to mean *at least* the recited number (*e.g.,* the bare recitation of "two cylinders," or "a plurality of cylinders," without other modifiers, typically means *at least* two cylinders). Furthermore, in those instances where a phrase such as "at least one of A, B, and C," "at least one of A, B, or C," or "an [item] selected from the group consisting of A, B, and C," is used, in general such a construction is intended in the sense one having skill in the art would understand the convention (*e.g*., any of these phrases would include but not be limited to systems that have A alone, B alone, C alone, A and B together, A and C together, B and C together, and/or A, B, and C together). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

## Claims

1. A system for controlling vehicle emissions in a geographic area, the system comprising an engine control system for a vehicle having an engine and a control system,
wherein the control system comprises:
an acknowledgement signal receiving unit to receive acknowledgement signals issued from vehicles within the target area; and
a control signal broadcast unit configured to broadcast a control signal including instructions for modification of a vehicle operating parameter to at least one vehicle in the target area, the control signal being selected in dependence on the acknowledgement signals issued from the vehicle within a target area and a previous compliance history for the vehicle whereby the instructions for modification of the vehicle operating parameter are more stringent if the vehicle has not previously complied with an instruction for modification of a vehicle operating parameter,
and wherein the engine control system; comprises:
a control signal receiving unit configured to receive the control signal, broadcast to the vehicle in the target area, from the control signal broadcast unit in the control system outside the vehicle during engine operation,
an engine controller configured to modify the vehicle operating parameter in accordance with the instructions; and
an acknowledgement signal sending unit configured to send:
an acknowledgement signal indicating any change of the vehicle operating parameter made in respons to the control signal and
a history of one or more vehicle operating parameters.

2. A system as claimed in Claim 1, wherein the control signal is selected for broadcast in dependence on a number or type of acknowledgement signals received.

3. The system of claim 1, wherein the acknowledgement signal sending unit is further configured to send an acknowledgement signal from among:
an acknowledgement signal indicating identity of the vehicle;
an acknowledgement signal indicating location of the vehicle;

4. The system of any one of the preceding claims, wherein the control signal receiving unit is configured to determine authenticity of the control signal.

5. The system of any one of the preceding claims, wherein the control signal receiving unit is configured to receive the control signal wirelessly.

6. The system of any one of the preceding claims, wherein the control signal receiving unit is configured to receive a plurality of instruction sets, and to select at least one of the plurality of instruction sets corresponding to a characteristic of the vehicle.

7. The system of claim 6, wherein the characteristic of the vehicle is a characteristic from among:
a vehicle type;
a vehicle operating parameter.

8. The system of any one of the preceding claims, wherein the control signal receiving unit is configured to receive an instruction to select one of a group of preprogrammed instruction sets.

9. The system of any one of the preceding claims, wherein the control signal receiving unit is configured to determine whether a condition included in the instructions obtains and the engine controller is configured to modify the vehicle operating parameter only when the condition obtains.

10. The system of claim 9, wherein the condition includes a probabilistic determination.

11. The system of any one of the preceding claims, wherein the engine controller is configured to provide a function from among
maintaining a designated value for the vehicle operating parameter in accordance with the instructions;
maintaining a designated range for the vehicle operating parameter in accordance with the instructions;
maintaining a designated average value for the vehicle operating parameter within a time interval in accordance with the instructions;
modifying a plurality of vehicle operating parameters in accordance with the instructions;
maintaining a designated time profile for the vehicle operating parameter in accordance with the instructions.

12. The system of any one of the preceding claims, wherein the control signal receiving unit is configured to receive instructions for modification of a vehicle operating parameter selected from the group consisting of compression ratio, timing of commencement of fuel combustion, timing of fuel injection, timing of fuel introduction into an air-inlet stream, valve timing, fuel composition, fuel-oxidizer ratio, air inlet temperature, air inlet pressure, number of operating cylinders, battery usage, battery charge, engine or drive-train usage of electrical energy, engine operating rate, output torque, exhaust gas temperature, exhaust gas temperature profile, exhaust gas composition, exhaust gas back pressure, catalytic converter reactive area, exhaust gas flow path, catalyst selection, sequestration of at least one exhaust gas component, exhaust gas flow rate, exhaust particulates density, exhaust particulate composition, exhaust particulate size, concentration of exhaust components at a selected location in an exhaust flow path, coolant temperature, and inlet-exhaust thermal coupling.

13. A method of operating a system for controlling vehicle emissions in a geographic area, wherein the system comprises a vehicle having an engine and a control system, the method comprising:
receiving, at the control system, acknowledgement signals issued from the vehicle within a target area; and
broadcasting, from the control system, to at least one vehicle in the target area, a control signal to the vehicle during operation of the engine, wherein the control signal includes instructions for changing a vehicle operating parameter, and is selected in dependence on the acknowledgement signals issued from the vehicle within the target area and a previous compliance history for the vehicle whereby the instructions for modification of the vehicle operating parameter are more stringent if the vehicle has not previously complied with an instruction for modification of a vehicle operating parameter, and
during operation of the engine, receiving, at the vehicle, the control signal, broadcast to the vehicle in the target area, from a control signal broadcast unit of the control system outside the vehicle; and
modifying, at the vehicle, the vehicle operating parameter in accordance with the instructions; and
sending, from the vehicle an acknowledgement signal indicating any change of the vehicle operating parameter made in respons to the control signal and
a history of one or more vehicle operating parameters.

## Patentansprüche

1. System zum Steuern von Fahrzeugemissionen in einem geografischen Gebiet, wobei das System ein Motorsteuersystem für ein Fahrzeug mit einem Motor und ein Steuersystem umfasst,
wobei das Steuersystem umfasst:
eine Bestätigungssignal-Empfangseinheit zum Empfangen von Bestätigungssignalen, die aus Fahrzeugen innerhalb des Zielgebiets ausgegeben sind; und
eine Steuersignal-Übertragungseinheit, die dazu ausgebildet ist, ein Steuersignal, das Anweisungen zur Modifikation eines Fahrzeugbetriebsparameters enthält, an mindestens ein Fahrzeug in dem Zielgebiet zu übertragen, wobei das Steuersignal in Abhängigkeit von den Bestätigungssignalen, die aus dem Fahrzeug innerhalb eines Zielgebiets ausgegeben sind, und einem bisherigen Konformitätsverlauf für das Fahrzeug ausgewählt ist, wobei die Anweisungen zur Modifikation des Fahrzeugbetriebsparameters strenger sind, wenn das Fahrzeug eine Anweisung zur Modifikation eines Fahrzeugbetriebsparameters noch nicht befolgt hat,
und wobei das Motorsteuersystem umfasst:
eine Steuersignalempfangseinheit, die dazu ausgebildet ist, das an das Fahrzeug in dem Zielgebiet übertragene Steuersignal aus der Steuersignal-Übertragungseinheit in dem Steuersystem außerhalb des Fahrzeugs während des Motorbetriebs zu empfangen,
eine Motorsteuerung, die dazu ausgebildet ist, den Fahrzeugbetriebsparameter entsprechend den Anweisungen zu modifizieren; und
eine Bestätigungssignal-Sendeeinheit, die dazu ausgebildet ist, zu senden:
ein Bestätigungssignal, das eine in Antwort auf das Steuersignal erfolgte Änderung des Fahrzeugbetriebsparameters angibt und
einen Verlauf eines oder mehrerer Fahrzeugbetriebsparameter.

2. System gemäß Anspruch 1, bei dem das Steuersignal in Abhängigkeit von einer Anzahl oder Art empfangener Bestätigungssignale zum Übertragen ausgewählt ist.

3. System nach Anspruch 1, bei dem die Bestätigungssignal-Sendeeinheit ferner dazu ausgebildet ist, eines der folgenden Bestätigungssignale zu senden:
ein Bestätigungssignal, das die Identität des Fahrzeugs angibt;
ein Bestätigungssignal, das den Ort des Fahrzeugs angibt.

4. System nach einem der vorstehenden Ansprüche, bei dem die Steuersignalempfangseinheit dazu ausgebildet ist, die Authentizität des Steuersignals zu bestimmen.

5. System nach einem der vorstehenden Ansprüche, bei dem die Steuersignalempfangseinheit dazu ausgebildet ist, das Steuersignal drahtlos zu empfangen.

6. System nach einem der vorstehenden Ansprüche, bei dem die Steuersignalempfangseinheit dazu ausgebildet ist, eine Vielzahl von Anweisungssätzen zu empfangen und mindestens einen von der Vielzahl von Anweisungssätzen entsprechend einer Eigenschaft des Fahrzeugs auszuwählen.

7. System nach Anspruch 6, bei dem die Eigenschaft des Fahrzeugs eine der folgenden Eigenschaften ist:
ein Fahrzeugtyp;
ein Fahrzeugbetriebsparameter.

8. System nach einem der vorstehenden Ansprüche, bei dem die Steuersignalempfangseinheit dazu ausgebildet ist, eine Anweisung zum Auswählen von einem aus einer Gruppe vorprogrammierter Anweisungssätze zu empfangen.

9. System nach einem der vorstehenden Ansprüche, bei dem die Steuersignalempfangseinheit dazu ausgebildet ist, zu bestimmen, ob eine in den Anweisungen enthaltene Bedingung gilt, und die Motorsteuerung dazu ausgebildet ist, den Fahrzeugbetriebsparameter nur dann zu modifizieren, wenn die Bedingung gilt.

10. System nach Anspruch 9, bei dem die Bedingung eine probabilistische Bestimmung aufweist.

11. System nach einem der vorstehenden Ansprüche, bei dem die Motorsteuerung dazu ausgebildet ist, eine der folgenden Funktionen bereitzustellen:
Beibehalten eines vorgesehenen Werts für den Fahrzeugbetriebsparameter entsprechend den Anweisungen;
Beibehalten eines vorgesehenen Bereichs für den Fahrzeugbetriebsparameter entsprechend den Anweisungen;
Beibehalten eines vorgesehenen Durchschnittswerts für den Fahrzeugbetriebsparameter innerhalb eines Zeitintervalls entsprechend den Anweisungen;
Modifizieren einer Vielzahl von Fahrzeugbetriebsparametern entsprechend den Anweisungen;
Beibehalten eines vorgesehenen Zeitprofils für den Fahrzeugbetriebsparameter entsprechend den Anweisungen.

12. System nach einem der vorstehenden Ansprüche, bei dem die Steuersignalempfangseinheit dazu ausgebildet ist, Anweisungen zur Modifikation eines Fahrzeugbetriebsparameters zu empfangen, der ausgewählt ist aus der Gruppe bestehend aus Verdichtungsverhältnis, Zeitsteuerung des Beginns der Kraftstoffverbrennung, Zeitsteuerung der Kraftstoffeinspritzung, Zeitsteuerung der Kraftstoffeinleitung in einen Lufteinlassstrom, Ventilzeitsteuerung, Kraftstoffzusammensetzung, Kraftstoff-Oxidationsmittel-Verhältnis, Lufteinlasstemperatur, Lufteinlassdruck, Zahl der betriebenen Zylinder, Batterienutzung, Batterieladung, Nutzung elektrischer Energie durch Motor oder Antriebsstrang, Motorbetriebsgeschwindigkeit, Abtriebsdrehmoment, Abgastemperatur, Abgastemperaturprofil, Abgaszusammensetzung, Abgasgegendruck, Katalysatorreaktionsfläche, Abgasströmungsweg, Katalysemittelwahl, Sequestrierung mindestens einer Abgaskomponente, Abgasströmungsgeschwindigkeit, Abgaspartikeldichte, Abgaspartikelzusammensetzung, Abgaspartikelgröße, Konzentration von Abgaskomponenten an einer ausgewählten Stelle in einem Abgasströmungsweg, Kühlmitteltemperatur und thermische Einlass-Abgas-Kopplung.

13. Verfahren zum Betreiben eines Systems zum Steuern von Fahrzeugemissionen in einem geografischen Gebiet, wobei das System ein Fahrzeug mit einem Motor und ein Steuersystem umfasst, wobei das Verfahren umfasst:
Empfangen von Bestätigungssignalen, die aus dem Fahrzeug innerhalb eines Zielgebiets ausgegeben sind, an dem Steuersystem und
Übertragen eines Steuersignals an das Fahrzeug, während des Betriebs des Motors, aus dem Steuersystem, an mindestens ein Fahrzeug in dem Zielgebiet, wobei das Steuersignal Anweisungen zum Ändern eines Fahrzeugbetriebsparameters enthält und in Abhängigkeit von den Bestätigungssignalen, die aus dem Fahrzeug innerhalb des Zielgebiets ausgegeben sind, und einem bisherigen Konformitätsverlauf für das Fahrzeug ausgewählt ist, wobei die Anweisungen zur Modifikation des Fahrzeugbetriebsparameters strenger sind, wenn das Fahrzeug eine Anweisung zur Modifikation eines Fahrzeugbetriebsparameters noch nicht befolgt hat, und
während des Betriebs des Motors, Empfangen des an das Fahrzeug in dem Zielgebiet übertragenen Steuersignals an dem Fahrzeug aus einer Steuersignal-Übertragungseinheit des Steuersystems außerhalb des Fahrzeugs,
Modifizieren des Fahrzeugbetriebsparameters entsprechend den Anweisungen, an dem Fahrzeug und
Senden eines Bestätigungssignals, das eine in Antwort auf das Steuersignal erfolgte Änderung des Fahrzeugbetriebsparameters angibt, und
eines Verlaufs eines oder mehrerer Fahrzeugbetriebsparameter, aus dem Fahrzeug.

## Revendications

1. Système en vue de la commande d'émission de véhicules dans une zone géographique, le système comprenant un système de commande du moteur pour un véhicule possédant un moteur et un système de commande,
dans lequel le système de commande comprend :
une unité de réception de signaux de confirmation afin de recevoir des signaux de confirmation émis à partir de véhicules au sein de la zone cible ; et
une unité de diffusion de signaux de commande configurée pour diffuser un signal de commande comportant des instructions en vue de la modification d'un paramètre d'exploitation de véhicule relatif à au moins un véhicule dans la zone cible, le signal de commande étant sélectionné en fonction des signaux de confirmation émis à partir du véhicule à l'intérieur d'une zone cible et d'un historique de conformité précédent pour le véhicule, selon lequel les instructions en vue de la modification du paramètre d'exploitation de véhicule sont plus restrictives si le véhicule ne s'est pas conformé auparavant à une instruction en vue de la modification d'un paramètre d'exploitation de véhicule,
et dans lequel le système de commande du moteur comprend :
une unité de réception de signaux de commande configurée pour réceptionner un signal de commande, la diffusion au véhicule dans la zone cible à partir d'une unité de diffusion de signal de commande dans le système de commande en dehors du véhicule pendant l'exploitation du moteur,
une commande de moteur configurée afin de modifier le paramètre d'exploitation du véhicule selon les instructions ; et
une unité d'envoi de signaux de confirmation configurée pour envoyer :
un signal de confirmation indiquant tout changement du paramètre d'exploitation du véhicule effectué en réponse au signal de commande et
un historique d'un ou plusieurs paramètres d'exploitation du véhicule.

2. Système tel que revendiqué dans la revendication 1, dans lequel le signal de commande est sélectionné pour la diffusion en fonction d'un nombre ou d'un type de signaux de confirmation réceptionnés.

3. Système selon la revendication 1, dans lequel l'unité d'envoi de signaux de confirmation est par ailleurs configurée pour envoyer un signal de confirmation parmi :
un signal de confirmation indiquant l'identité du véhicule ;
un signal de confirmation indiquant l'emplacement du véhicule.

4. Système selon une quelconque des revendications précédentes, dans lequel l'unité de réception de signaux de commande est configurée pour déterminer l'authenticité du signal de commande.

5. Système selon une quelconque des revendications précédentes, dans lequel l'unité de réception de signaux de commande est configurée pour réceptionner le signal de commande sans fil.

6. Système selon une quelconque des revendications précédentes, dans lequel l'unité de réception de signaux de commande est configurée pour réceptionner une pluralité de jeux d'instructions et pour sélectionner au moins un de la pluralité de jeux d'instructions correspondant à une caractéristique du véhicule.

7. Système selon la revendication 6, dans lequel la caractéristique du véhicule est une caractéristique parmi :
un type de véhicule ;
un paramètre d'exploitation du véhicule.

8. Système selon une quelconque des revendications précédentes, dans lequel l'unité de réception de signaux de commande est configurée pour réceptionner une instruction afin de sélectionner un parmi un groupe de jeux d'instructions préprogrammés.

9. Système selon une quelconque des revendications précédentes, dans lequel l'unité de réception de signaux de commande est configurée pour déterminer si une condition comprise dans les instructions est constituée et si la commande de moteur est configurée afin de modifier les paramètres d'exploitation du véhicule uniquement si la condition est constituée.

10. Système selon la revendication 9, dans lequel la condition comporte une détermination probabiliste.

11. Système selon une quelconque des revendications précédentes, dans lequel la commande de moteur est configurée pour livrer une fonction parmi :
le maintien d'une valeur désignée pour le paramètre d'exploitation du véhicule selon les instructions ;
le maintien d'une plage désignée pour le paramètre d'exploitation du véhicule selon les instructions ;
le maintien d'une valeur moyenne désignée pour le paramètre d'exploitation du véhicule dans un intervalle de temps selon les instructions ;
la modification d'une pluralité de paramètres d'exploitation du véhicule selon les instructions ; et
le maintien d'un profil de temps désigné pour le paramètre d'exploitation du véhicule selon les instructions.

12. Système de commande du moteur selon une quelconque des revendications précédentes, dans lequel l'unité de diffusion de signal de commande est configurée pour réceptionner des instructions de modification d'un paramètre d'exploitation de véhicule sélectionné parmi le groupe se composant du taux de compression, du minutage du commencement de la combustion de carburant, du minutage de l'injection de carburant, du minutage de l'introduction de carburant dans un flux d'admission d'air, du minutage de soupape, de la composition du carburant, du taux d'oxydant du carburant, de la température d'admission d'air, de la pression d'admission d'air, du nombre de cylindres moteurs, de l'utilisation de la batterie, de la charge de la batterie, de l'utilisation d'énergie électrique du moteur ou du groupe motopropulseur, du taux de fonctionnalité du moteur, du couple de sortie, de la température du gaz d'échappement, du profil de température du gaz d'échappement, de la composition du gaz d'échappement, de la contre-pression de gaz d'échappement, de la zone réactive du convertisseur catalytique, de la voie d'écoulement du gaz d'échappement, de la sélection de catalyseur, du piégeage d'au moins un composant de gaz d'échappement, du débit de gaz d'échappement, de la densité des particules de gaz d'échappement, de la composition des particules d'échappement, de la taille des particules d'échappement, de la concentration des particules d'échappement à un emplacement sélectionné dans une voie d'écoulement d'échappement, de la température de liquide de refroidissement et du couplage thermique admission-échappement.

13. Méthode d'exploitation d'un système en vue de la commande d'émission de véhicules dans une zone géographique, dans laquelle le système comprend un véhicule possédant un moteur et un système de commande, la méthode comprenant :
la réception, sur le système de commande, de signaux de confirmation émis à partir du véhicule à l'intérieur d'une zone cible ; et
la diffusion, à partir du système de commande, à au moins un véhicule dans la zone cible, d'un signal de commande relatif au véhicule pendant l'exploitation du moteur, dans laquelle le signal de commande comporte des instructions en vue de la modification d'un paramètre d'exploitation de véhicule et est sélectionné en fonction des signaux de confirmation émis à partir du véhicule à l'intérieur de la zone cible et un historique de conformité précédent pour le véhicule, sachant que les instructions en vue de la modification du paramètre d'exploitation de véhicule sont plus restrictives si le véhicule ne s'est pas conformé auparavant à une instruction en vue de la modification d'un paramètre d'exploitation de véhicule, et
pendant l'exploitation du moteur, la réception sur le véhicule du signal de commande, la diffusion au véhicule dans la zone cible à partir d'une unité de diffusion de signal de commande du système de commande en dehors du véhicule,
la modification sur le véhicule des paramètres d'exploitation du véhicule selon les instructions ; et
l'expédition à partir du véhicule d'un signal de confirmation indiquant tout changement du paramètre d'exploitation du véhicule effectué en réponse au signal de commande ; et
un historique d'un ou plusieurs paramètres d'exploitation du véhicule.
